# EUROPEAN PATENT SPECIFICATION

(11) **EP 3 068 730 B1**
(45) Date of publication and mention of the grant of the patent: **12.06.2019**
(21) Application number: 14799413.1
(22) Date of filing: 14.11.2014
(51) Int. Cl.: C02F 1/00

(54) **A PERCOLATION FILTERING DEVICE**
PERKOLATIONSFILTERUNGSVORRICHTUNG
DISPOSITIF FILTRANT À PERCOLATION

(30) Priority: 14.11.2013 IT PD20130308
(43) Date of publication of application: 21.09.2016
(73) Proprietor: Laica S.p.A., 36021 Barbarano Vicentino (VI) (IT)
(72) Inventor: MORETTO, Maurizio, I-36100 Vicenza (IT)
(74) Representative: Locas, Davide
(86) International application number: PCT/EP2014/074616
(87) International publication number: WO 2015/071415

(56) References cited:
- WO-A1-2009/015679
- WO-A1-2012/168880
- DE-A1-102009 000 231

## Description

The subject of the invention is a percolation filtering device for filtering water and other drinks, of the type comprising a replaceable filtering cartridge.

Percolation filtering systems are known, typically jug-shaped, with a divider element which divides the jug into a top tank, for collecting water to be filtered, and a bottom tank, for collecting the filtered water. The two tanks communicate solely through a channel, in which a filtering cartridge is placed, so that the entire flow passes through it. To prevent the use of the jug without its filtering cartridge or, more generally, with incompatible filtering cartridges, in the channel, downstream of the cartridge, there is placed a normally-closed shut-off valve which is driven into the open state, when the filtering cartridge is inserted into the channel, by an enabler element, in general belonging to the filtering cartridge. Examples of this technology are described in international patent applications WO 2009 015679 or WO 2010 081845.

In the system described in WO 2010 081845, or in its priority document DE 10 2009 000231, the valve is housed inside a passage produced in the divider element downstream of the cartridge. To reach the valve, bringing it into the open position, the cartridges are provided with a tube-shaped extension which is made to enter the passage until it reaches an operational feature of the valve. Thus, the valve is made to rotate, with a lever movement, and is brought into the open position.

It must be understood that the main purpose for the use of the valve is to prevent liquid from passing to the bottom tank in the event that the filtering cartridge is not positioned or, alternatively, in the event that a cartridge suitable for being used with the specific filtering system is not present.

However, the known solutions can easily be tampered with by the user, for example using small pins, or other elastic items, inserted in the valve seat to keep the valve locked in the open position regardless of the presence of the cartridge.

Among other aspects, the possibility of opening the valve with such alternative items is described in the same patent WO 2010 081845 in which a plurality of different embodiments are envisaged to open the valve.

Instead it is desirable to produce filtering jugs and other similar systems in which operation without a cartridge or with an incorrect cartridge is prevented more effectively.

The aim of the present invention is to provide a percolation filtering device suitable for meeting this requirement, and which at the same time can be produced at low cost.

This aim is achieved by a percolation filtering device which is produced in accordance with the claim 1 and by the kit according to claim 6.

It should be noted that the percolation filtering device according to the invention comprises a radial extension that, opposite to the device disclosed in DE 10 2009 000231, represents an obstacle to the passage of an enabler element inside the valve passage of the filtering device, as well as to other elements, for the opening of a respective valve member.

The features and advantages of the invention will become apparent from the following detailed description of some of its preferred embodiments illustrated, by way of indication and in a non-limiting manner, with reference to the appended drawings in which:
- Figure 1 is a lateral view, in cross-section, of a filtering device according to the present invention and of an associated filtering cartridge;
- Figures 2 and 2A are, respectively, a plan view and a lateral view of a valve passage of the filtering device according to the present invention;
- Figures 3A and 3B are, respectively, a lateral cross-section and a perspective view in cross-section of the valve passage of Figure 2;
- Figures 4, 4A and 4B are, respectively, a lateral view, a perspective view and an associated detail, of a filtering cartridge according to the present invention;
- Figure 5 is a perspective view according to a lateral cross-section of a divider element, specific to the device according to the present invention, provided with the filtering cartridge of Figure 4;
- Figures 5A and 5B are two detailed views which illustrate the divider element of Figure 5 with and without a filtering cartridge respectively;
- Figures 6 and 7 are, respectively, a plan view and a perspective view of a first variant embodiment of the valve passage of the device according to the present invention;
- Figures 6A, 6B and 7A, 7B are plan views and perspective views of respective other embodiments of the valve passage;
- Figures 8A and 8B are two perspective views, from different observation points, of alternative embodiments of the filtering cartridge according to the present invention, suitable for being used with the valve passages of Figures 6A and 6B respectively; and
- Figures 9A and 9B are two perspective views according to different observation points of a divider element non according to the present invention.

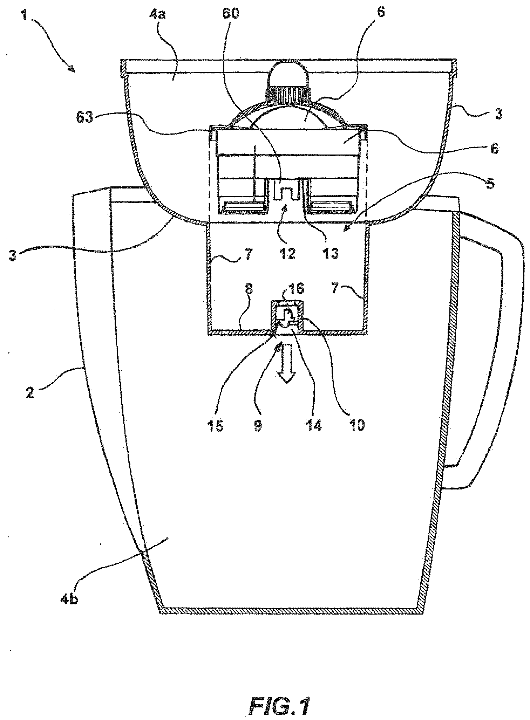

In Figure 1, the reference 1 indicates in an overall sense a percolation filtering device including a jug 2, inside of which there is placed a divider element 3 (hopper) which divides the jug 2 into a top tank 4a, for collecting water to be filtered, and a bottom tank 4b, for collecting the filtered water. The two tanks 4a,b communicate solely through a channel which forms a seat 5 for receiving a filtering cartridge 6. The cartridge 6 has a sealing edge 63 that can be engaged at an entrance opening of the seat, so as to make the water poured into the tank 4a flow into the cartridge.

The seat 5 has a lateral shell 7 and a base 8 in which a valve passage 9 is open, forming the only opening for discharge from the top tank to the bottom tank. The valve passage 9 has a generally cylindrical shape with a sleeve section 10 protruding towards the cartridge 6 where the sleeve section 10 is received in a recess in the form of a cutout 12 of the base 13 of the cartridge.

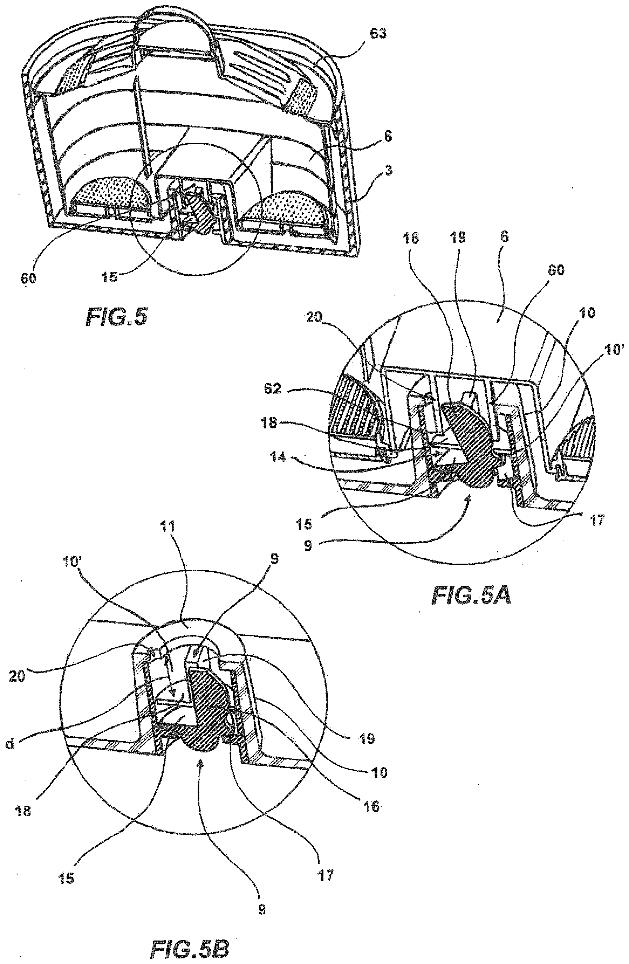

According to a preferred embodiment, the valve passage 9 is made by means of a separate cylindrical body 10', which can be inserted, for example with slight interference, into the sleeve section 10 of the divider element 3, as can be observed in Figures 5, 5A and 5B.

Still with reference to these drawings, in the distal part of the valve passage 9 with respect to the cartridge 6, there is made a valve seat 14 on which there normally sits a valve member 15. The valve member 15 has a manoeuvring arm 16 which extends into the passage 9 so that, by acting on the arm 16, it is possible to manoeuvre the valve member 15 into the open state, moving it away from the valve seat 14. Thus, the passage 9, together with the seat 14 and the associated valve member 15, form a flow shut-off valve which, when enabled, allows the passage of liquid from the top tank 4a to the bottom tank 4b through the filtering cartridge, while preventing communication between the two tanks when the valve is disabled.

The moving away of the valve member 15, and consequently the enabling of the shut-off valve, takes place, by means of a cylindrically shaped part 60 protruding from the base of the cartridge 6, preferably arranged at the recess 12, and which will be described in greater detail later. In any case, Figures 5A and 5B illustrate the valve member 14 in the open position, following insertion of the part 60 into the valve passage 9, and in the closed position, respectively.

In the present embodiment, the part 60 has a tubular shape and, therefore, by inserting the cartridge into the seat 5, the part enters the passage 9 defined in the sleeve section 10, engaging and turning the manoeuvring arm 16 of the valve member 15 so as to move it away from the valve seat 14. Such a part therefore functions as an enabler element 60 of the valve and has the function of interacting with the arm 16 of the valve member 15 (normally closed) housed in the valve passage 9 in order to actuate it into the open position.

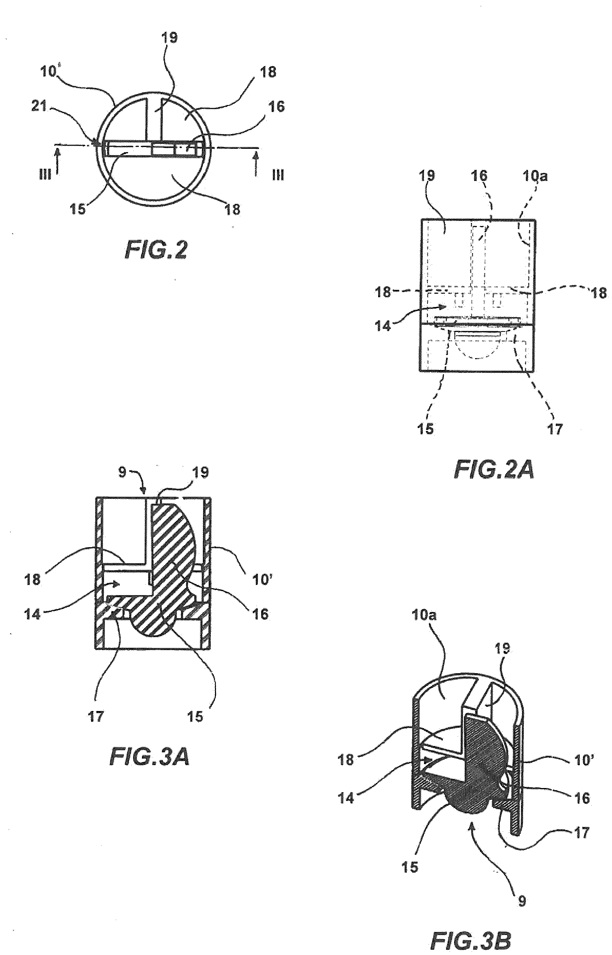

In Figures 2, 3A and 3B, the valve passage 9 is illustrated in greater detail.

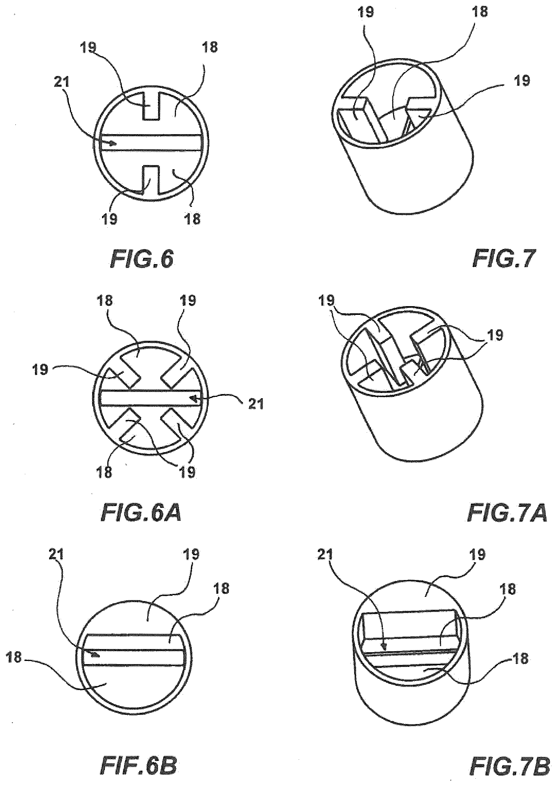

According to a preferred embodiment, the valve passage 9 comprises, at a distal end relative to the cartridge 6, an annular closure portion 17, upon which the valve member 15 can abut with the aim of shutting off the flow of liquid towards the collecting tank 4b. The valve seat 14 is therefore defined between this annular portion 17 and a pair of intermediate walls 18, between which there is defined a slot 21, more clearly illustrated in the embodiments of Figures 6, 6A and 6B, through which the manoeuvring arm 16 can pass.

Upstream of the intermediate walls 18, and therefore of the valve member 15, the valve passage 9 further comprises an extension 19, which extends, preferably, from an inner wall 10a of the passage 9 towards the central part of the passage 9. In greater detail, in the present embodiment, the extension 19 is developed from an inner wall 10a of the cylindrical body 10' in a radial direction towards an inner region of the valve passage 9.

Preferably, the intermediate walls 18 and the extension 19 are produced as a single body with the cylindrical body 10'. Consequently, the fact that the cylindrical body 10' is tightly inserted into the sleeve section 10 of the divider element 3 turns out to be particularly advantageous in that it provides for a high degree of production simplicity and for the use of different materials with respect to the remaining parts of the jug.

Furthermore, the intermediate walls define an abutting surface 18 suitable for abutting a distal end 62 of the enabler element 60, in such a way as to limit the travel of the enabler element 60 inside the valve passage 9. The positioning of a travel stop inside the valve passage 9 turns out to be particularly advantageous in that it avoids the need to produce this feature at the sealing edge 63, therefore avoiding any risk of damaging the same.

As can be observed in Figure 2, the radial extension 19 is preferably adjacent to the manoeuvring arm 16 and arranged in such a way as not to prevent it from oscillating for the purpose of bringing the valve member 15 into the open position. In other words, the extension 19 is developed from the inner wall 10a of the valve passage 9 without interfering with the movement of the valve member 15 between its open and closed positions.

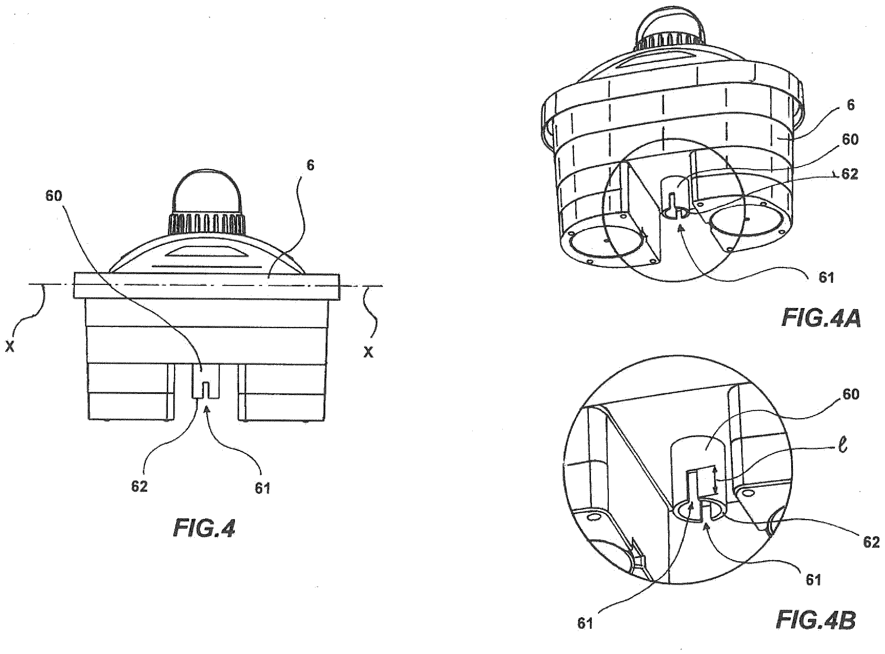

Furthermore, it is clear that the radial extension 19 represents an obstacle to the passage of the enabler element 60 inside the valve passage 9, as well as to other elements, for the opening of the valve member. However, as can be observed in Figures 4 and 5, for the purposes of allowing the cartridge 6 to be used correctly, the cylindrical tubular surface which forms the enabler element 60 exhibits at least one notch 61 of such a shape as to be able to accommodate inside it the radial extension 19, at least for a sufficient portion to reach the manoeuvring arm 16 and open the valve member 15.

As can be observed in the drawings, in the present embodiment, the radial extension 19 exhibits a rectilinear segment shape and the notch 61 is presented as a square slot of complimentary shape.

According to a preferred embodiment, the cartridge 6 exhibits a pair of notches 61 arranged in diametrically opposed positions so as to make the insertion of the cartridge 6, or more generally of the enabler element 60, possible in two symmetrical directions.

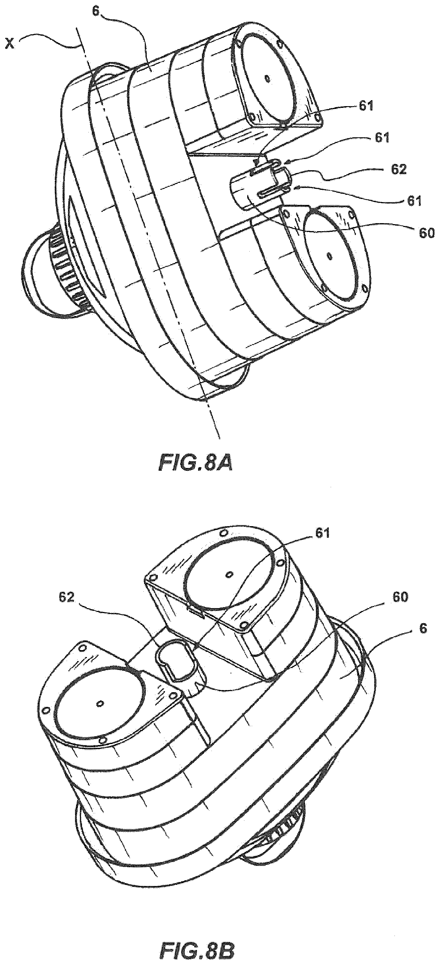

More generally, as can also be seen in Figure 8A, the filtering cartridge 6 can comprise an equal number of notches 61, oriented symmetrically with respect to a longitudinal axis of symmetry X of the cartridge, through which axis a longitudinal plane of symmetry of the cartridge passes.

It is therefore noted that the manoeuvring arm 16 may be reached only by specially shaped enabler elements, therefore making the opening of the valve using other means complicated.

Furthermore, since in a preferred embodiment, the radial extension is adjacent to the manoeuvring arm, it follows that the rotation of the latter about a longitudinal axis of the valve passage 9 is substantially prevented or limited.

This provides for avoiding the rotation of the valve member and of the arm about such an axis, therefore allowing the valve to operate with greater precision.

In addition, the cylindrical and tubular shape of the enabler element also provides for the possibility of providing a calibrated passage 20, formed by a widening on the inlet edge of the of the valve passage 9, which, once the enabler element 60 is inserted therein, allows the flow of water towards the bottom tank 4b to be appropriately controlled, by defining a constriction of very precise dimensions.

According to a preferred embodiment, the calibrated passage 20 is formed at a collar 11 produced at an entry end of the sleeve section 10, i.e. the end proximal, when in use, to the cartridge 6. Preferably, the collar 11 exhibits an inlet section that substantially coincides with that of the enabler element 60, in such a way that the only passage between the top tank 4a and the bottom tank 4b is defined by the calibrated passage 20, in such a way as to allow the flow of filtered water to be controlled according to a method that is known per se.

It is noted that advantageously the notch 61 exhibits a longitudinal extension I that is shorter with respect to the distance d between the collar 11 and the intermediate wall 18. Thus, when the enabler element 60 is inserted into the passage 9, the notch 61 is presented entirely downstream of the collar 11 and, therefore, the control effect produced by the calibrated passage 20 can be ensured.

Therefore, according to a preferred embodiment, the extension 19 is comprised within an axial development of the valve passage 9 and, more preferably, entirely downstream of the collar 11.

Furthermore, it must be observed that the presence of the notch 61 provides for giving a certain radial elasticity to the enabler element 60, therefore facilitating insertion into the passage 9. At the same time, the ratio between the abovementioned lengths I and d provides for achieving the desired flow control effect.

It is nevertheless clear that various flow control systems may be provided, for example by providing calibrated passages at the outlet of the cartridge by the use of tight-fitting parts, as illustrated for example in the embodiment of Figure 5.

In this case, the passage 20 may have dimensions so as not to represent a constriction, the flow controller part being arranged on the cartridge itself.

Figures 6A, 6B and 7A, 7B represent variant embodiments of the valve passage 9 according to the present invention, which are distinguished from one another by the positions and number of radial extensions.

In particular, the embodiment of Figures 6B and 7B provides for the radial extension to extend over an entire sector of the circumference defining the passage 9 and, as can be observed in Figure 8, the notch 61 on the cartridge 6 exhibits a shape that is complimentary to it.

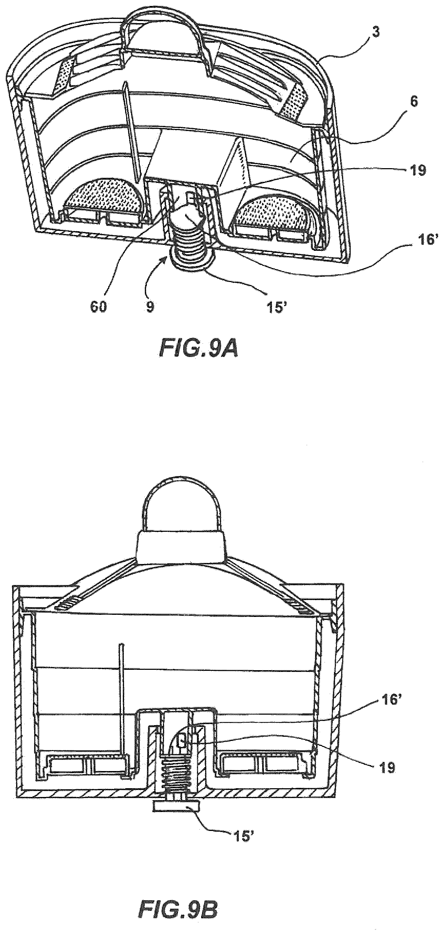

A further embodiment non according to the invention is described in Figures 9A and 9B, in which it can be observed how the same inventive principles can also be applied to axial-opening valves.

In particular, in the present embodiment, the opening of the valve member 15' takes place by pushing the manoeuvring arm 16' downwards by means of the enabler element 60, the features of which are similar to those of the previous embodiments.

## Claims

1. A percolation filtering device (1) comprising a divider element (3) which divides the device (1) into a top tank (4a), for collecting water to be filtered, and a bottom tank (4b), for collecting the filtered water, the two tanks (4a,b) communicating with each other through a channel (5) defined in the divider element which forms a seat for receiving a filtering cartridge (6), in which there is defined a valve passage (9) in the divider element (3) housing a flow shut-off valve (15, 16) suitable for selectively allowing/preventing the passage of liquid between the top tank (4a) and the bottom tank (4b), said flow shut-off valve (15, 16) comprising a valve member (15) movable between an open and a closed position and comprising a manoeuvring arm (16) for the purpose of bringing the valve member (15) into the open position, wherein said valve member (15) can be actuated into the open position by inserting an enabler element (60) inside the valve passage (9), the passage being arranged, when in use, downstream of the filtering cartridge (6), the valve passage (9) comprising a radial extension (19), secured to the passage (9) and arranged upstream of the valve member (15), **characterized in that** said extension (19) is shaped as a segment with a rectilinear development such that it can be accommodated inside a complementary shaped notch (61) formed in the enabler element (60), said extension (19) being developed from an inner wall (10a) of the valve passage (9) in a radial direction towards an inner region of the valve passage (9) without interfering with the movement of said valve member (15) between said open and closed positions, the radial extension (19) being extended through at least one section in a position adjacent to the manoeuvring arm (16) and arranged in such a way as not to prevent the manoeuvring arm (16) from oscillating for the purpose of bringing the valve member (15) into the open position.

2. A percolation filtering device (1) according to one of the preceding claims, wherein the valve passage (9) is defined by a cylindrical body (10') that can be inserted with interference into a sleeve section (10) of the divider element (3), the extension (19) being formed as a single body with the valve passage (9).

3. A percolation filtering device (1) according to one of the preceding claims, wherein the valve passage (9) comprises an abutting surface (18) suitable for abutting a distal end (62) of the enabler element (60) which is suitable for being inserted inside the valve passage (9) for the purpose of bringing the valve (15, 16) into the open position, in such a way as to limit the travel of the enabler element (60) inside the valve passage (9).

4. A percolation filtering device (1) according to one of the preceding claims, wherein the extension (19) is comprised within an axial development of the valve passage (9).

5. A percolation filtering device (1) according to claim 4, when dependent on claim 2, wherein a collar (11) is provided at an entry end of the sleeve section (10), the extension (19) being positioned entirely downstream of the collar (11).

6. A kit comprising a percolation filtering device according to one of the preceding claims and an enabler element (60) suitable for being inserted inside the valve passage (9) for the purpose of bringing the valve (15, 16) into the open position and comprising at least one notch (61) of a shape that is complementary to the radial extension (19).

7. A kit according to Claim 6, wherein the enabler element comprises a pair of notches (61) arranged in diametrically opposed positions.

8. A kit according to either Claim 6 or Claim 7, wherein the enabler element (60) is fixed as a single body to a filtering cartridge (6).

9. A kit according to Claim 7 and Claim 8, wherein the notches (61) are arranged in diametrically opposed positions with respect to a longitudinal axis of symmetry (X) of the filtering cartridge (6).

10. A kit according to one of Claims 6 to 9, wherein the valve passage (9) comprises an intermediate wall (18) suitable for defining an abutting surface of the enabler element (60), the notch (61) exhibiting a longitudinal extension (I) that is shorter with respect to a distance (d) between an end of the valve passage (9) proximal to the cartridge (6) and the intermediate wall (18).

## Patentansprüche

1. Perkolationsfiltervorrichtung (1), umfassend ein Trennelement (3), das die Vorrichtung (1) in einen oberen Tank (4a) zum Sammeln von zu filterndem Wasser, und einen Bodentank (4b) zum Sammeln des gefilterten Wassers unterteilt, wobei die beiden Tanks (4a,b) durch einen Kanal (5) miteinander in Verbindung stehen, der im Trennelement definiert ist, das einen Sitz zum Aufnehmen einer Filterpatrone (6) bildet, wobei ein Ventilkanal (9) im Trennelement (3) definiert ist, der ein Strömungsabsperrventil (15, 16) aufnimmt, das zum selektiven Zulassen/Verhindern des Durchtritts einer Flüssigkeit zwischen dem oberen Tank (4a) und dem unteren Tank (4b) geeignet ist, wobei das Strömungsabsperrventil (15, 16) ein Ventilglied (15) aufweist, das zwischen einer offenen und einer geschlossenen Position bewegbar ist und einen Manövrierarm (16) umfasst, um das Ventilelement (15) in die offene Position zu versetzen, wobei das Ventilelement (15) durch Einsetzen eines Freigabeelements (60) im Innern des Ventilkanals (9) in die offene Position überführt werden kann, wobei der Kanal im Gebrauch stromabwärts der Filterpatrone (6) angeordnet ist, wobei der Ventilkanal (9) eine radiale Verlängerung (19) aufweist, die am Kanal (9) befestigt ist und stromaufwärts des Ventilelements (15) angeordnet ist, **dadurch gekennzeichnet, dass** die Verlängerung (19) als Segment mit geradliniger Ausbildung geformt ist, sodass diese im Innern einer komplementär geformten Kerbe (61) aufgenommen werden kann, die im Freigabeelement (60) ausgebildet ist. wobei die Verlängerung (19) von einer Innenwand (10a) des Ventilkanals (9) in radialer Richtung zu einem Innenbereich des Ventilkanals (9) hin ausgebildet ist, ohne die Bewegung des Ventilglieds (15) zwischen den offenen und geschlossenen Positionen zu beeinträchtigen, wobei die radiale Verlängerung (19) durch zumindest einen Abschnitt an einer an den Manövrierarm (16) angrenzenden Position verlängert ist und derart eingerichtet ist, dass ein Schwingen des Manövrierarms (16) zum Versetzen des Ventilelements (15) in die offene Position nicht verhindert wird.

2. Perkolationsfiltervorrichtung (1) nach einem der vorhergehenden Ansprüche, **dadurch gekennzeichnet, dass** der Ventilkanal (9) durch einen zylindrischen Körper (10') definiert ist, der mit Übermaß in einen Hülsenabschnitt (10) des Trennelements (3) einsetzbar ist, wobei die Verlängerung (19 als Einzelkörper mit dem Ventilkanal (9) ausgebildet ist.

3. Perkolationsfiltervorrichtung (1) nach einem der vorhergehenden Ansprüche, wobei der Ventilkanal (9) eine Anlagefläche (18) aufweist, die zum Anliegen an einem distalen Ende (62) des Freigabeelements (60) geeignet ist, das zum Einsetzen in den Ventilkanal (9) geeignet ist, damit das Ventil (15, 16) in die offene Position derart versetzt wird, dass der Hub des Freigabeelements (60) im Innern des Ventilkanals (9) begrenzt wird.

4. Perkolationsfiltervorrichtung (1) nach einem der vorhergehenden Ansprüche, wobei die Verlängerung (19) in einer axialen Ausbildung des Ventilkanals (9) enthalten ist.

5. Perkolationsfiltervorrichtung (1) nach Anspruch 4, wenn abhängig von Anspruch 2, wobei ein Kragen (11) an einem Eintrittsende des Hülsenabschnitts (10) vorgesehen ist, wobei die Verlängerung (19) vollständig stromabwärts des Kragens (11) positioniert ist.

6. Kit, das eine Perkolationsfiltervorrichtung nach einem der vorhergehenden Ansprüche und ein Freigabeelement (60) umfasst, das zum Einsetzen in den Ventilkanal (9) geeignet ist, damit das Ventil (15, 16) in die offene Position versetzt wird, und zumindest eine Kerbe (61) mit einer Form umfasst, die zur radialen Verlängerung (19) komplementär ist.

7. Kit nach Anspruch 6, wobei das Freigabeelement ein Paar Kerben (61) aufweist, die an diametral gegenüberliegenden Positionen angeordnet sind.

8. Kit nach Anspruch 6 oder 7, wobei das Freigabeelement (60) als Einzelkörper an einer Filterpatrone (6) befestigt ist.

9. Kit nach Anspruch 7 und 8, wobei die Kerben (61) an diametral gegenüberliegenden Positionen in Bezug auf eine Symmetrieachse (X) der Filterpatrone (6) angeordnet sind.

10. Kit nach einem der Ansprüche 6 bis 9, wobei der Ventilkanal (9) eine Zwischenwand (18) aufweist, die zum Definieren einer Anlagefläche des Freigabeelements (60) geeignet ist, wobei die Kerbe (61) eine Längserstreckung (l) aufweist, die in Bezug auf einen Abstand (d) zwischen einem Ende des Ventilkanals (9) proximal zur Patrone (6) und der Zwischenwand (18) kürzer ist.

## Revendications

1. Dispositif filtrant à percolation (1) comprenant un élément diviseur (3) qui divise le dispositif (1) en une cuve supérieure (4a), destinée à collecter de l'eau à filtrer, et une cuve inférieure (4b), destinée à collecter l'eau filtrée, les deux cuves (4a, b) communiquant l'une avec l'autre par un canal (5) défini dans l'élément diviseur qui forme une assise destinée à recevoir une cartouche filtrante (6), dans lequel il est défini un passage à vanne (9) dans l'élément diviseur (3) logeant une vanne d'arrêt d'écoulement (15, 16) apte à permettre/empêcher sélectivement le passage de liquide entre la cuve supérieure (4a) et la cuve inférieure (4b), ladite vanne d'arrêt d'écoulement (15, 16) comprenant un élément vanne (15) mobile entre une position ouverte et une position fermée et comprenant un bras de manoeuvre (16) dans le but d'amener l'élément vanne (15) dans la position ouverte, dans lequel ledit élément vanne (15) peut être actionné vers la position ouverte par insertion d'un élément facilitateur (60) à l'intérieur du passage à vanne (9), le passage étant agencé, en service, en aval de la cartouche filtrante (6), le passage à vanne (9) comprenant une extension radiale (19), fixée au passage (9) et agencée en amont de l'élément vanne (15), **caractérisé en ce que** ladite extension (19) a la forme d'un segment à développement linéaire de sorte qu'elle peut être reçue à l'intérieur d'une encoche de forme complémentaire (61) formée dans l'élément facilitateur (60), ladite extension (19) se développant à partir d'une paroi interne (10a) du passage à vanne (9) dans une direction radiale vers une région interne du passage à vanne (9) sans interférer avec le déplacement dudit élément vanne (15) entre lesdites positions ouverte et fermée, l'extension radiale (19) s'étendant à travers au moins une partie dans une position adjacente au bras de manoeuvre (16) et agencée de manière à ne pas empêcher le bras de manoeuvre (16) d'osciller dans le but d'amener l'élément vanne (15) dans la position ouverte.

2. Dispositif filtrant à percolation (1) selon l'une des revendications précédentes, dans lequel le passage à vanne (9) est défini par un corps cylindrique (10') qui peut être inséré avec interférence dans une partie manchon (10) de l'élément diviseur (3), l'extension (19) formant un seul corps avec le passage à vanne (9).

3. Dispositif filtrant à percolation (1) selon l'une des revendications précédentes, dans lequel le passage à vanne (9) comprend une surface de butée (18) apte à venir en butée sur une extrémité distale (62) de l'élément facilitateur (60) qui est apte à être insérée dans le passage à vanne (9) dans le but d'amener la vanne (15, 16) dans la position ouverte, de manière à limiter le déplacement de l'élément facilitateur (60) à l'intérieur du passage à vanne (9).

4. Dispositif filtrant à percolation (1) selon l'une des revendications précédentes, dans lequel l'extension (19) est comprise dans un développement axial du passage à vanne (9).

5. Dispositif filtrant à percolation (1) selon la revendication 4, lorsqu'elle dépend de la revendication 2, dans lequel un collier (11) est prévu sur une extrémité d'entrée de la partie manchon (10), l'extension (19) étant placée entièrement en aval du collier (11).

6. Ensemble comprenant un dispositif filtrant à percolation selon l'une des revendications précédentes et un élément facilitateur (60) apte à être inséré à l'intérieur du passage à vanne (9) dans le but d'amener la vanne (15, 16) dans la position ouverte et comprenant au moins une encoche (61) d'une forme qui est complémentaire de celle de l'extension radiale (19).

7. Ensemble selon la revendication 6, dans lequel l'élément facilitateur comprend une paire d'encoches (61) agencées dans des positions diamétralement opposées.

8. Ensemble selon la revendication 6 ou la revendication 7, dans lequel l'élément facilitateur (60) est fixé comme un seul corps à une cartouche filtrante (6).

9. Ensemble selon la revendication 6 et la revendication 8, dans lequel les encoches (61) sont agencées dans des positions diamétralement opposées par rapport à un axe de symétrie longitudinal (X) de la cartouche filtrante (6).

10. Ensemble selon l'une des revendications 6 à 9, dans lequel le passage à vanne (9) comprend une paroi intermédiaire (18) apte à définir une surface de butée de l'élément facilitateur (60), l'encoche (61) présentant une extension longitudinale (l) qui est plus courte qu'une distance (d) entre une extrémité du passage à vanne (9) à proximité de la cartouche (6) et la paroi intermédiaire (18).
